# EUROPEAN PATENT SPECIFICATION

(11) **EP 1 422 349 B1**
(45) Date of publication and mention of the grant of the patent: **22.12.2010**
(21) Application number: 03026599.5
(22) Date of filing: 19.11.2003
(51) Int. Cl.: E01F 13/02, B29D 28/00, B29C 65/02

(54) **Sheet-like element with customizing elements, highlighting elements, reflective elements, lettering, characters and the like particularly for building-yard use and for delimiting spaces**
Individualisierungselemente, Hervorhebungselemente, Reflexionselemente, Beschriftungen, Zeichen und dergleichen aufweisendes folienartiges Element insbesondere zur Verwendung an Baustellen zur Abgrenzung von Räumen
Element en forme de feuille avec des éléments ayant une fonction de personnalisation, d'accentuation et de réflexion, et avec des inscriptions, des caractères et similaires notamment pour des chantiers et pour délimiter des espaces

(30) Priority: 21.11.2002 IT MI20022474
(43) Date of publication of application: 26.05.2004
(73) Proprietor: Tenax S.p.A., 23897 Viganò (Lecco) (IT)
(72) Inventor: Beretta, Mario, 23896 Sirtori (Prov. of Lecco) (IT); Molteni, Paolo, 20050 Villa Raverio (Prov. of Milano) (IT)
(74) Representative: Modiano, Micaela Nadia

(56) References cited:
- EP-A- 0 196 492
- EP-A- 0 376 861
- EP-A- 0 861 943
- EP-A- 1 094 263
- WO-A-97/37163
- DE-A- 2 051 223
- FR-A- 2 516 440
- FR-A- 2 633 215
- FR-A- 2 643 854
- FR-A- 2 644 248
- FR-A- 2 697 094
- FR-A- 2 703 704
- FR-A- 2 713 810
- FR-A- 2 733 568
- FR-A- 2 755 901
- GB-A- 1 420 269
- US-A- 4 911 872
- US-A- 4 949 664
- US-A- 5 201 497
- US-A- 5 865 427
- US-A1- 2001 033 911

## Description

The present invention relates to a sheet-like element with indications for building-yard use and for delimiting spaces.

As is known, spaces such as building yards and the like are currently delimited by using nets constituted by a sheet-like element made of plastics that is provided with a plurality of through openings of various sizes.

These kinds of net, which are normally produced by extrusion, also generally have strip-like regions that are continuous and free from holes, especially for example at the longitudinal edges.

With these kinds of nets, currently there are considerable difficulties if it is necessary to apply lettering, drawings, reflective elements, indications or the like, since it is practically impossible to perform printing operations on the net because they can be deleted easily; it is therefore necessary to resort to external elements, such as signs and the like, that must be supported proximate to the net.

Obviously, this approach causes considerable difficulties and requires the use of labor to position lettering and the like.

US-A-2001/0033911 discloses a sheet-like element as in the pre-characterizing portion of the appended claim 1.

FR-A-2 733 568 discloses a method for manufacturing a sheet-like element as in the pre-characterizing portion of the appended claim 6.

The aim of the invention is to solve the problem noted above, by providing a sheet-like element with indications for building-yard use and for delimiting spaces, that allows to apply indications directly onto the sheet-like element.

Within this aim, an object of the invention is to provide a sheet-like element that though having considerably improved characteristics, can be obtained with conventional technologies and without particular cost increases.

Another object of the present invention is to provide a sheet-like element that thanks to its particular constructive characteristics is capable of giving the greatest assurances of practicality, reliability and safety in use and is also competitive from a merely economical standpoint.

This aim and these and other objects that will become better apparent hereinafter are achieved by a sheet-like element with indications for building-yard use and for delimiting spaces, according to the invention, as defined in the appended claim 1. Its method for manufacturing is defined in claim 6.

Further characteristics and advantages of the invention will become better apparent from the description of a preferred but not exclusive embodiment of a sheet-like element with indications for building-yard use and for delimiting spaces, illustrated by way of nonlimiting example in the accompanying drawings, wherein:

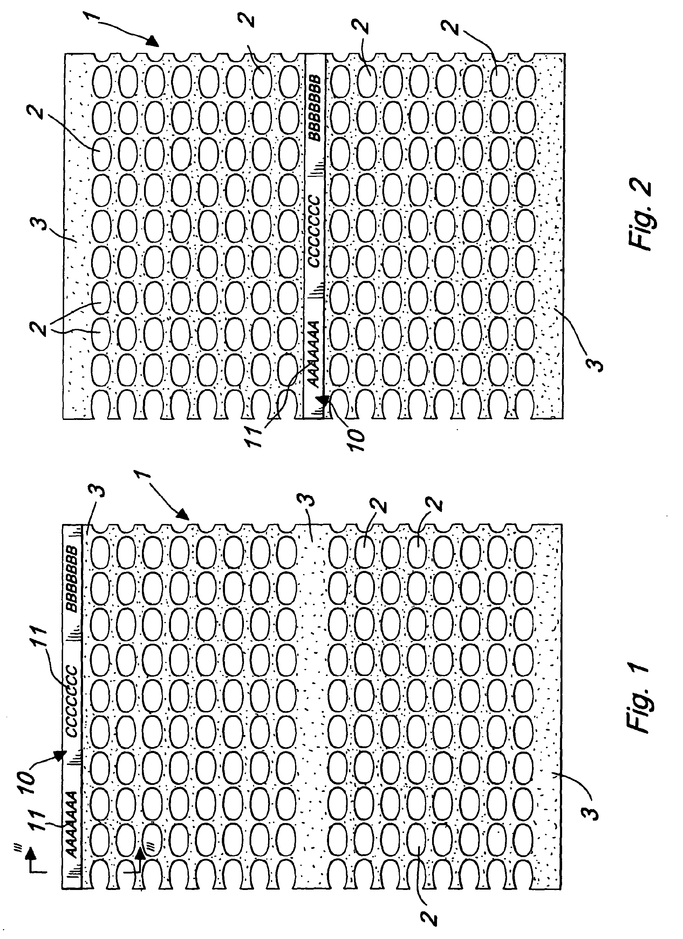

Figure 1 is a schematic view of the sheet-like element according to the invention, with the tape arranged at an edge;
Figure 2 is a view of a sheet-like element with the tape arranged in a central region;
Figure 3 is a schematic sectional view, taken along the line III-III of Figure 1;
Figure 4 is a view of the step of application of the tape during extrusion of the sheet-like body;
Figure 5 is a view of a mono-oriented sheet-like element;
Figure 6 is a view of a biaxially-oriented sheet-like element.

With reference to the figures, the sheet-like element with indications comprises a sheet-like body 1, which is advantageously made of plastic material such as polyethylene, polypropylene and the like, which has a plurality of openings 2 so as to provide a classic net for delimiting spaces.

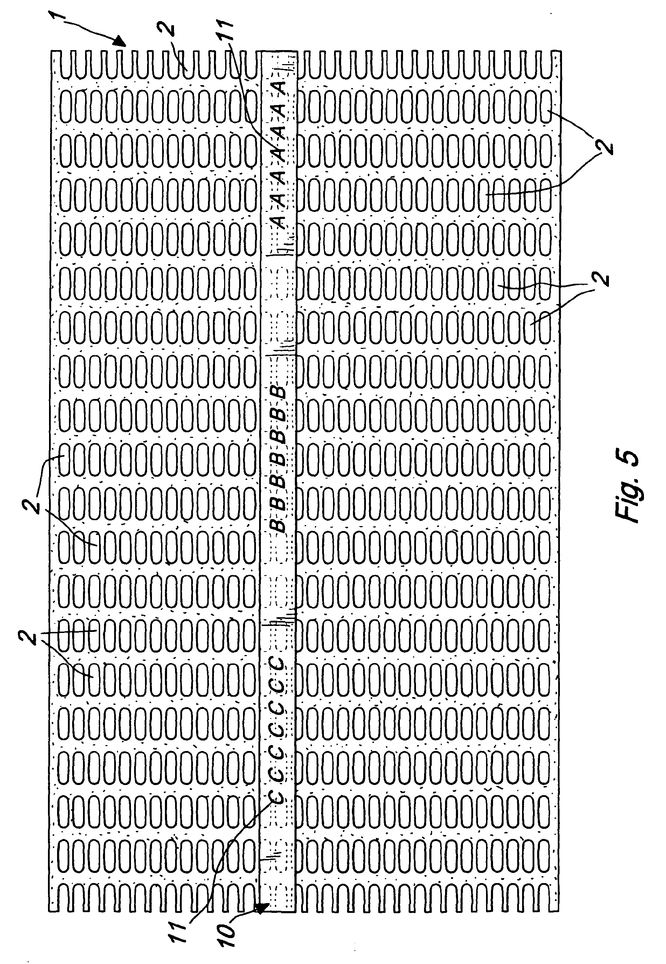

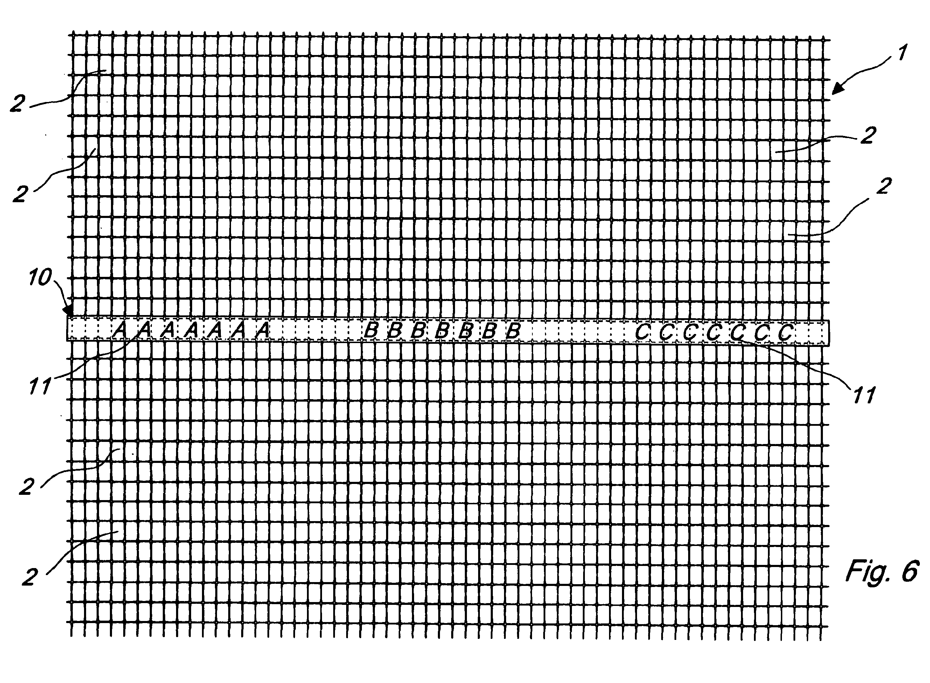

The net can be of any kind and can be mono-oriented or biaxially-oriented, as shown in Figures 5 and 6.

Advantageously, on the sheet-like body 1 it is possible to provide bands or strips 3 where the sheet-like body is continuous.

The particularity of the invention consists in that a tape 10 is provided monolithically on the longitudinally elongated sheet-like body 1; such tape is provided with indications, generally designated by the reference numeral 11, which are provided directly on the tape, which is then coupled monolithically to the sheet-like body 1, preferably at the continuous bands or strips 3, if they are present.

The tape 10 is applied by thermal bonding directly during extrusion of the sheet-like body.

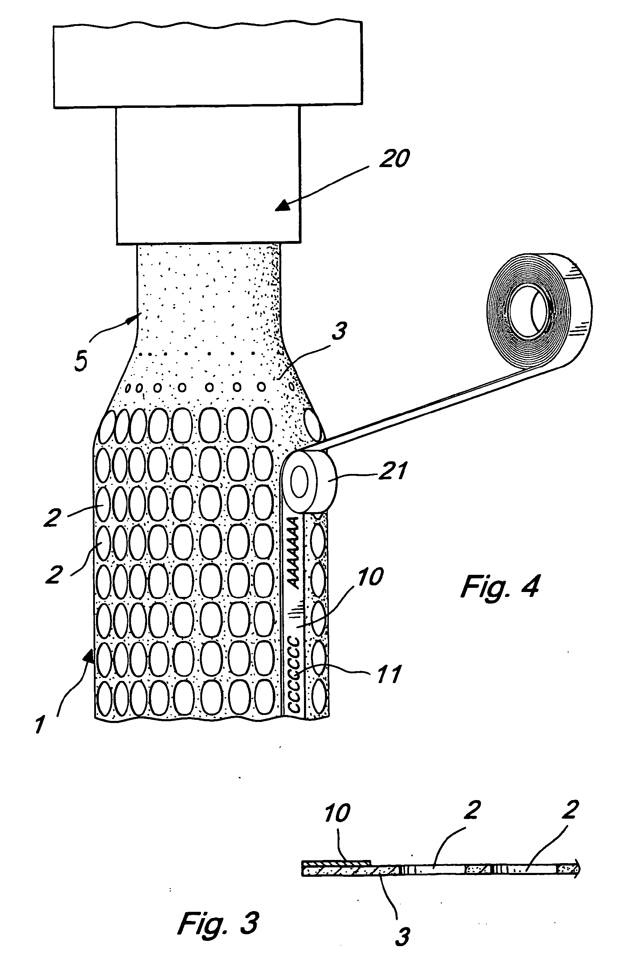

As shown schematically in Figure 4, it is possible to provide, directly downstream of the extrusion head 20, extruding a plastics, tubular element 5 with a plurality of through openings 2, an applicator 21 that applies by pressing the tape 10 to the still-warm plastic material, and it is therefore possible to achieve an intimate bonding especially if the same materials or otherwise chemically compatible materials are used for the sheet-like body and for the tape eventually obtained by longitudinal cutting of the tubular element 5.

The possibility to apply the tape directly at extrusion time allows to obtain a monolithic assembly, providing in practice a sheet-like element in which the indications are already embedded.

From the above description it is therefore evident that the invention achieves the intended aim and objects, and in particular the fact is stressed that a sheet-like element for delimiting spaces, such as a plastic net, is provided which allows to embed directly therein indications without having to resort to printing operations that are practically impossible to perform on the manufactured sheet-like element.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A sheet-like element with indications for building-yard use and for delimiting spaces, comprising a sheet-like body (1) made of extruded plastics that is longitudinally elongated and provided with through holes (2) therein, and a tape (10) bonded to said sheet-like body (1), said tape (10) provided with said indications **characterized in that** said tape (10) is made of chemically compatible or the same plastic material as said sheet-like body (1) and **in that** said tape (10) is monolithically embedded in said sheet-like body (1) by pressure and thermal bonding directly during extrusion of said sheet-like body (1).

2. The sheet-like element according to claim 1, **characterized in that** said sheet-like body (1) is monoaxially oriented.

3. The sheet-like element according to claim 1, **characterized in that** said sheet-like body (1) is biaxially oriented.

4. The sheet-like element according to any of claims 1-3, **characterized in that** said sheet-like body (1) has a plurality of through openings (2) and at least one continuous band (3) that runs longitudinally on said sheet-like body (1).

5. The sheet-like element according to the preceding claims, **characterized in that** said tape (10) is arranged at said continuous band (3).

6. A method for manufacturing a sheet-like element with indications for building yard use and delimiting spaces, comprising extruding a tubular element (5) made of plastics, providing through holes (2) therein; the method being **characterized by** monolithically embedding by pressure and thermal bonding in said tubular element (5), directly downstream of the extrusion head (20), a tape (10) provided with indications (11); cooling said tubular element (5) and obtaining, by longitudinal cutting, a longitudinally elongated sheet-like body (1),
said tape (10) and said sheet-like body (1) being made of chemically compatible plastic materials or being made of the same plastic material.

## Patentansprüche

1. Folienartiges Element mit Hinweisen zur Verwendung an Baustellen und zur Abgrenzung von Räumen, umfassend einen aus extrudiertem Kunststoff hergestellten folienartigen Körper (1), der der Länge nach langgestreckt ist und mit Durchgangslöchern (2) darin versehen ist, und ein auf den folienartigen Körper (1) aufgeklebtes Band (10), wobei das Band (10) mit den Hinweisen versehen ist, **dadurch gekennzeichnet, dass** das Band (10) aus chemisch kompatiblen oder aus demselben Kunststoffmaterial wie der folienartige Körper (1) hergestellt ist, und dass das Band (10) monolithisch in den folienartigen Körper (1) durch Druck und thermisches Verkleben direkt während der Extrusion des folienartigen Körpers (1) eingebettet ist.

2. Folienartiges Element nach Anspruch 1, **dadurch gekennzeichnet, dass** der folienartige Körper (1) monoaxial orientiert ist.

3. Folienartiges Element nach Anspruch 1, **dadurch gekennzeichnet, dass** der folienartige Körper (1) biaxial orientiert ist.

4. Folienartiges Element nach einem der Ansprüche 1 bis 3, **dadurch gekennzeichnet, dass** der folienartige Körper 1 eine Mehrzahl von Durchgangslöchern (2) und mindestens einen durchgehenden Streifen (3) hat, der der Länge nach an dem folienartigen Körper (1) verläuft.

5. Folienartiges Element nach den vorangehenden Ansprüchen, **dadurch gekennzeichnet, dass** das Band (10) an dem durchgehenden Streifen (3) angeordnet ist.

6. Verfahren zur Herstellung eines folienartigen Elements mit Hinweisen zur Verwendung an Baustellen und zur Abgrenzung von Räumen, umfassend das Extrudieren eines rohrförmigen Elements (5) aus Kunststoff, das vorsehen von Durchgangslöchern (2) darin, das Verfahren ist **gekennzeichnet durch** monolithisches Einbetten eines mit Hinweisen (11) versehenen Bandes (10) **durch** Druck und thermisches Verkleben in das rohrförmige Element (5) direkt unterhalb des Extruderkopfes (20), Kühlen des rohrförmigen Elements (5) und Erzeugung eines der Länge nach langgestreckten folienartigen Körpers (1) **durch** Längsschnitt, wobei das Band (10) und der folienartige Körper (1) aus chemisch kompatiblen Kunststoffmaterialien oder aus demselben Kunststoffmaterial hergestellt sind.

## Revendications

1. Elément en forme de feuille comportant des indications pour une utilisation sur un chantier de construction et pour la délimitation d'espaces, élément comprenant un corps en forme de feuille (1) réalisé en matières plastiques extrudées, corps qui est allongé longitudinalement et pourvu de trous passants (2), et un ruban (10) relié audit corps en forme de feuille (1), ledit ruban (10) étant pourvu desdites indications, **caractérisé en ce que** ledit ruban (10) est réalisé dans une matière plastique chimiquement compatible ou dans la même matière plastique que ledit corps en forme de feuille (1) et **en ce que** ledit ruban (10) est noyé monolithiquement dans ledit corps en forme de feuille (1) par pression et thermosoudage directement pendant l'extrusion dudit corps en forme de feuille (1).

2. Elément en forme de feuille suivant la revendication 1, **caractérisé en ce que** ledit corps en forme de feuille (1) est orienté monoaxialement.

3. Elément en forme de feuille suivant la revendication 1, **caractérisé en ce que** ledit corps en forme de feuille (1) est orienté biaxialement.

4. Elément en forme de feuille suivant une quelconque des revendications 1 à 3, **caractérisé en ce que** ledit corps en forme de feuille (1) présente une pluralité d'ouvertures passantes (2) et au moins une zone continue (3) qui s'étend longitudinalement sur ledit corps en forme de feuille (1).

5. Elément en forme de feuille suivant les revendications précédentes, **caractérisé en ce que** ledit ruban (10) est disposé au niveau de la zone continue (3).

6. Procédé de fabrication d'un élément en forme de feuille comportant des indications pour une utilisation sur un chantier de construction et pour la délimitation d'espaces, procédé comprenant l'extrusion d'un élément tubulaire (5) réalisé -en matière plastique et la réalisation dans celui-ci de trous passants (2), le procédé étant **caractérisé en ce que**, dans ledit élément tubulaire (5), un ruban (10) pourvu d'indications (11) est noyé monolithiquement par pression et thermosoudage directement en aval de la tête d'extrusion (20), **en ce que** ledit élément tubulaire (5) est refroidi et qu'un corps allongé longitudinalement en forme de feuille (1) est obtenu grâce à un découpage longitudinal ledit ruban (10) et ledit corps en forme de feuille (1) étant réalisés dans des matières plastiques chimiquement compatibles ou dans la même matière plastique.
